# EUROPÄISCHE PATENTSCHRIFT

(11) **EP 2 897 847 B1**
(45) Veröffentlichungstag und Bekanntmachung des Hinweises auf die Patenterteilung: **04.03.2020**
(21) Anmeldenummer: 13762762.6
(22) Anmeldetag: 05.09.2013
(51) Int. Cl.: B61D 17/04, B61F 1/14, B62D 24/00

(54) **SCHIENENFAHRZEUG**
RAIL VEHICLE
VÉHICULE SUR RAILS

(30) Priorität: 18.09.2012 AT 503962012
(43) Veröffentlichungstag der Anmeldung: 29.07.2015
(73) Patentinhaber: Siemens Mobility Austria GmbH, 1210 Wien (AT)
(72) Erfinder: STENITZER, Peter, 1230 Wien (AT)
(74) Vertreter: Deffner, Rolf
(86) Internationale Anmeldenummer: PCT/EP2013/068321
(87) Internationale Veröffentlichungsnummer: WO 2014/044536

(56) Entgegenhaltungen:
- EP-A1- 0 742 132
- EP-A1- 2 357 108
- DE-A1- 4 343 800
- US-A- 5 964 490
- US-A- 6 000 342

## Beschreibung

### Technisches Gebiet

Die Erfindung betrifft ein Schienenfahrzeug.

### Stand der Technik

Schienenfahrzeuge werden praktisch ausschließlich aus Metall gefertigt, wobei Stahl oder Aluminiumlegierungen zum Einsatz kommen. Fahrzeuge aus Stahl können aus rostfreiem Stahl oder konventionellem Stahl gefertigt werden, wobei dann Rostschutzmaßnahmen erforderlich sind. Weitere Materialien, wie das vor Jahrzehnten gebräuchliche Holz, werden nur äußerst selten und meist nur für mechanisch gering belastete Bauteile eingesetzt. Beispielsweise verbreitert sich der Einsatz von Frontmasken aus Kunststoff immer mehr, da solcherart gestalterisch ansprechende Fahrzeugenden einfach herstellbar sind. Gebräuchlicherweise ist ein Fahrzeug aus einem einzelnen Material gefertigt, für besondere Einsatzzwecke kann jedoch eine Mischung unterschiedlicher Materialien vorteilhaft sein. Beispielsweise kann ein Nahverkehrsfahrzeug ein Untergestell aus (rostfreiem) Stahl und einen Wagenkasten (Passagierraum) aus einer Leichtmetallegierung umfassen. Verbindungsstellen unterschiedlicher Metalle sind korrosionsgefährdet, sodass bei solchen Fahrzeugen besondere, aufwendige und teure Maßnahmen an diesen Verbindungsstellen erforderlich sind.

Weiters wirken sich die unterschiedlichen Wärmeausdehnungskoeffizienten der Materialien miteinander verbundener Bauteile negativ aus, da es dabei zu mechanischen Spannungen und zum Verzug der Bauteile kommen kann. Abhilfemaßnahmen gemäß dem Stand der Technik, beispielsweise Gleitstücke sind wartungsbedürftig.

Ein solches Schienenfahrzeug ist z.B. aus der US 6 000 342 A1 bekannt.

### Darstellung der Erfindung

Der Erfindung liegt daher die Aufgabe zugrunde, ein Schienenfahrzeug anzugeben, welches ein Untergestell und einen Wagenkasten aus jeweils unterschiedlichen Materialien umfasst und welches an der Verbindungsstelle zwischen diesen Materialien Kontaktkorrosion und Wärmespannungen vermeidet. Die Aufgabe wird durch ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeug welches ein Untergestell und einen Wagenkasten umfasst, wobei das Untergestell und der Wagenkasten aus unterschiedlichen Werkstoffen hergestellt sind, beschrieben, wobei mindestens ein Festlager vorgesehen ist, welches Kräfte in Längs- und Querrichtung des Schienenfahrzeugs zwischen dem Untergestell und dem Wagenkasten übermittelt, und eine Klebeverbindung zwischen dem Untergestell und dem Wagenkasten vorgesehen ist.

Dadurch ist der Vorteil erzielbar, ein Schienenfahrzeug aufbauen zu können, wobei der Wagenkasten und das Untergestell aus jeweils unterschiedlichen Materialien gefertigt sind und dabei die Gefahr der Kontaktkorrosion verhindert wird.

Weiters weist ein erfindungsgemäßes Schienenfahrzeug vorteilhafte akustische und schwingungstechnische Eigenschaften auf, da die Klebeverbindung die Körperschall- und Vibrationsübertragung von dem Untergestell auf den Wagenkasten reduziert.

Weiters reduziert die erfindungsgemäße Verbindung zwischen dem Untergestell und dem Wagenkasten die Wärmeübertragung zwischen diesen Baugruppen, da die Klebstoffschicht eine wesentlich geringere Wärmeleitfähigkeit aufweist als eine unmittelbare Metall-Metall Kontaktstelle.

Ein besonderer Vorteil gegenständlicher Erfindung liegt darin, dass Wagenkasten und Untergestell getrennt voneinander, gegebenenfalls auch in unterschiedlichen Fertigungsstätten hergestellt werden können. Solcherart kann die Durchlaufzeit zur Herstellung eines Schienenfahrzeugs reduziert werden, da einzelne Arbeiten (z.B. Lackierarbeiten) andere Arbeitsvorgänge (z.B. Innenausstattung) nicht mehr blockieren können.

Erfindungsgemäß wird der Wagenkasten (typischerweise ein Passagierraum) mittels einer Klebeverbindung mit dem Untergestell verbinden. Solcherart können unterschiedliche Wärmeausdehnungen dieser Baugruppen aufgenommen werden ohne das dabei Befestigungselemente (Schraub- oder Nietverbindungen) vorzusehen sind, welche entweder einer temperaturabhängigen Scherbelastung ausgesetzt sind, oder das aufwendige und wartungsintensive Loslager eingesetzt werden müssen.

Eine Klebeverbindung kann, bei fachgerechter Auslegung diese Schubspannungen aufnehmen. Die Wärmeausdehnung eines typischen Fahrzeugs (12 Meter Länge, Stahl/Aluminium-Paarung) beträgt über den zu erwartenden Temperaturbereich (typ. -20 bis +40 Grad Celsius) ca. 3mm Ausdehnungsdifferenz. Durch geeignete Bemessung des Klebespalts kann diese Ausdehnungsdifferenz von gebräuchlichen Klebstoffen aufgenommen werden. Dabei ist typischerweise ein Klebespalt von ca. 10-20mm vorzusehen.

Ein wesentlicher Vorteil einer Klebeverbindung ist es, dass die Klebung sehr einfach auf mehreren Ebenen ausgeführt werden kann und das eine große Freiheit in der Auslegung der Klebeflächengeometrie besteht.

Als Klebstoffe eignen sich für die jeweilige Materialpaarung zugelassene Ein- und Zweikomponentenklebstoffe, typischerweise auf Polyurethanbasis.

Die Herstellung der Klebeverbindung kann auf zweierlei Arten erfolgen. Bei einer ersten Methode wird der Klebstoff auf einen Verbindungspartner aufgebracht und dann der zweite Verbindungspartner aufgesetzt. Dabei ist das Aufbringen sehr einfach, da die Klebestelle gut zugänglich ist, allerdings ist nach dem Aufbringen des Klebstoffs die sogenannte Offenzeit des Klebstoffs zu berücksichtigen, innerhalb dieser der Verbindungspartner aufzusetzen ist. Gelingt dies nicht, so ist der Klebstoff wieder zu entfernen. Ein weiterer Nachteil dieser Methode ist es, dass nach dem Fügen der Verbindungspartner die gesamte Einheit (das Schienenfahrzeug) bis zum Aushärten des Klebstoffs nicht bewegt werden darf. Weitere Arbeiten an dem Fahrzeug sind somit während dieser Zeit nur sehr eingeschränkt möglich.

Eine zweite Methode vermeidet diesen Nachteil. Dabei werden die Verbindungspartner ohne Klebstoff gefügt, wobei mittels Abstandshaltern der erforderliche Klebespalt vorgehalten wird. Anschließend wird der Klebespalt mit Klebstoff verfüllt.

Erfindungsgemäß ist ein Festlager vorzusehen, welches Längs- und Querkräfte (nicht jedoch Vertikalkräfte) zwischen dem Wagenkasten und dem Untergestell übermittelt. Dieses Festlager übermittelt insbesondere die bei Rangierstößen auftretenden Längskräfte. Die Anordnung dieses Festlagers erfolgt vorzugsweise Fahrzeugmittig, da solcherart die in Richtung der Wagenenden zunehmende Wärmeausdehnungsdifferenz die Klebestellen nur mit der halben Scherbelastung beaufschlagt. Sehr unvorteilhaft wäre es, das Festlager an einem Wagenende vorzusehen, da solcherart am entgegengesetzten Wagenende die Klebeverbindung die gesamte Wärmeausdehnungsdifferenz aufnehmen müßte.

Eine Ausführungsform der Erfindung sieht vor, das Festlager als in einer Bohrung geführter Bolzen auszuführen. Dabei kann die Bohrung entweder in dem Untergestell oder dem Wagenkasten angeordnet werden, der Bolzen entsprechend in der jeweils anderen Baugruppe. Dar Bolzen kann einerseits ohne weitere Maßnahmen in der Bohrung geführt werden, oder es kann eine Einlage, z.B. in Form einer Kunststoffhülse in die Bohrung eingelegt werden. Solcherart kann jegliche Kontaktkorrosion verhindert werden.

Es ist mindestens ein Festlager vorzusehen, wobei es je nach Art des Schienenfahrzeugs auch vorteilhaft sein kann mehrere Festlager vorzusehen. Beispielsweise kann bei einem Untergestell mit zwei Längsträgern je Längsträger ein fahrzeugsmittiges Festlager vorgesehen werden.

Eine weitere Ausführungsform der Erfindung sieht vor das Festlager unmittelbar durch die Geometrie miteinander korrespondierender Bauteil des Untergestells und des Wagenkastens zu bilden. Beispielsweise können diese Baugruppen an ihren Berührflächen zueinander Kanten oder Vorsprünge aufweisen, welche die Funktion des Festlagers erfüllen. Dadurch ist der Vorteil erzielbar, kein dediziertes Festlager vorsehen zu müssen und solcherart weniger Konstruktions- und Bauaufwand leisten zu müssen.

Mit gegenständlicher Erfindung kann ein Schienenfahrzeug, welches ein Untergestell und einen Wagenkasten aus unterschiedlichen Materialien aufweist einfacher und mit weniger Bauteilen ausgeführt werden als es Konstruktionen gemäß dem Stand der Technik erlauben. Insbesondere ist die Klebeverbindung wartungsfrei, was einen wesentlichen Vorteil gegenüber Verbindungen mit Loslagern darstellt.

### Kurzbeschreibung der Zeichnungen

Es zeigen beispielhaft:
- **Fig.1**: Schienenfahrzeug Seitenansicht.
- **Fig.2**: Schienenfahrzeug Querschnitt.

### Ausführung der Erfindung

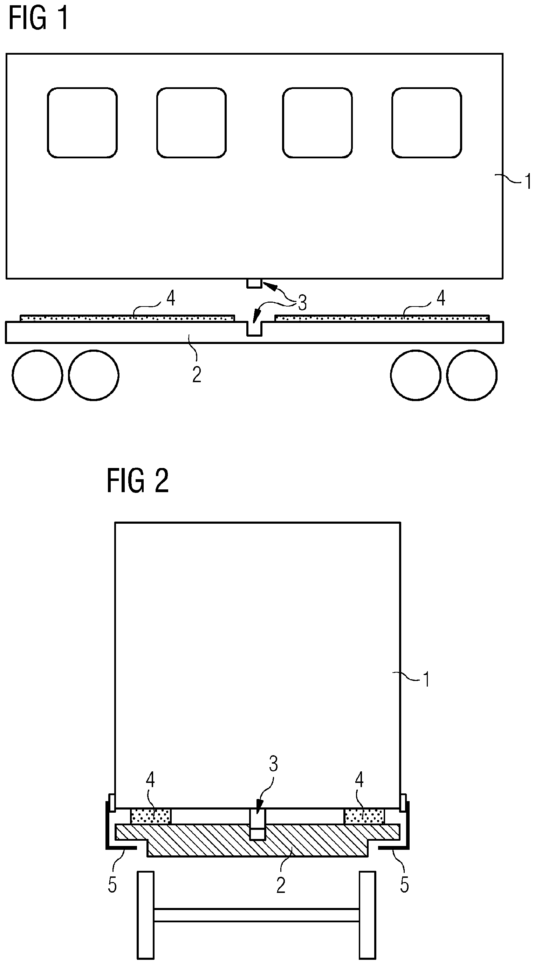

**Fig.1** zeigt beispielhaft und schematisch ein Schienenfahrzeug in Seitenansicht. Es ist stark abstrahiert ein Schienenfahrzeug mit einem Untergestell 2 und einem Wagenkasten 1 dargestellt. Diese beiden Baugruppen sind voneinander beabstandet dargestellt, wie es beispielsweise vor dem Fügen erforderlich ist. Ein Festlager 3 ist fahrzeugmittig angeordnet. Dieses Festlager 3 umfasst einen Wagenkastenseitig angeordneten Bolzen und eine Fahrgestellseitige Bolzenaufnahme. Die Verbindung zwischen dem Wagenkasten 1 und dem Untergestell 2 erfolgt mittels der Klebeverbindungen 4.

**Fig.2** zeigt beispielhaft und schematisch Schienenfahrzeug. Dieses ist in einer Schnittdarstellung quer zur Längsachse dargestellt. Das Schienenfahrzeug umfasst ein Untergestell 2 und einen Wagenkasten 1. Diese Baugruppen sind in miteinander verbundener Position gezeigt, wobei die Verbindung mittels Klebeverbindungen 4 erfolgt. Ein Festlager 3 bestimmt die exakte Position der Baugruppen zueinander und übermittelt die Längs- und Querkräfte. Beidseitig des Schienenfahrzeugs sind je eine Aushebesicherung 5 angeordnet, welche ein Abheben des Wagenkastens 1 von dem Untergestell 2 mittels Formschlusses verhindern.

### Liste der Bezeichnungen

- 1: Wagenkasten
- 2: Untergestell
- 3: Festlager
- 4: Klebeverbindung
- 5: Aushebesicherung

## Patentansprüche

1. Schienenfahrzeug, umfassend ein Untergestell (2) und einen Wagenkasten (1), wobei das Untergestell (2) und der Wagenkasten (1) aus unterschiedlichen Werkstoffen hergestellt sind und wobei eine Klebeverbindung (4) zwischen dem Untergestell (2) und dem Wagenkasten (1) vorgesehen ist, **dadurch gekennzeichnet, dass** mindestens ein Festlager (3) vorgesehen ist, welches Kräfte in Längs- und Querrichtung des Schienenfahrzeugs zwischen dem Untergestell (2) und dem Wagenkasten (1) übermittelt.

2. Schienenfahrzeug nach Anspruch 1, **dadurch gekennzeichnet, dass** das mindestens eine Festlager (3) fahrzeugmittig angeordnet ist.

3. Schienenfahrzeug nach einem der Anspruch 1 oder 2,
**dadurch gekennzeichnet, dass** eine formschlüssige Aushebesicherung (5) vorgesehen ist, welche nach einem Versagen der Klebeverbindung (4) Vertikalkräfte zwischen dem Untergestell (2) und dem Wagenkasten (1) übermittelt.

4. Schienenfahrzeug nach einem der Ansprüche 1 bis 3
**dadurch gekennzeichnet, dass** das mindestens eine Festlager (3) eine Bohrung und einen in diese Bohrung einbringbaren Bolzen umfasst.

5. Schienenfahrzeug nach einem der Ansprüche 1 bis 3,
**dadurch gekennzeichnet, dass** das mindestens eine Festlager (3) unmittelbar durch die Geometrie miteinander korrespondierender Bauteil des Untergestells (2) und des Wagenkastens (1) gebildet ist.

6. Schienenfahrzeug nach einem der Ansprüche 1 bis 5, **dadurch gekennzeichnet, dass** das Untergestell (2) aus Stahl und der Wagenkasten (1) aus einer Leichtmetallegierung hergestellt ist.

## Claims

1. Rail vehicle, comprising an underframe (2) and a vehicle body (1), wherein the underframe (2) and the vehicle body (1) are made of different materials and wherein an adhesive connection (4) is provided between the underframe (2) and the vehicle body (1), **characterised in that** at least one static bearing (3) is provided, which transmits forces in the longitudinal and transverse direction of the rail vehicle between the underframe (2) and the vehicle body (1).

2. Rail vehicle according to claim 1, **characterised in that** the at least one static bearing (3) is arranged in the vehicle centre.

3. Rail vehicle according to one of claims 1 or 2, **characterised in that** a positive anti-lifting device (5) is provided, which transmits vertical forces between the underframe (2) and the vehicle body (1) after a failure of the adhesive connection (4).

4. Rail vehicle according to one of claims 1 to 3, **characterised in that** the at least one static bearing (3) comprises a bore hole and a bolt which can be inserted into said bore hole.

5. Rail vehicle according to one of claims 1 to 3, **characterised in that** the at least one static bearing (3) is formed directly by the geometry of components corresponding to one another of the underframe (2) and the vehicle body (1).

6. Rail vehicle according to one of claims 1 to 5, **characterised in that** the underframe (2) is made of steel and the vehicle body (1) of a light metal alloy.

## Revendications

1. Véhicule sur rails, comprenant un châssis (2) et une caisse (1), le châssis (2) et la caisse (1) étant fabriqués en différents matériaux et dans lequel une liaison adhésive (4) est prévue entre le châssis (2) et la caisse (1),
**caractérisé en ce qu'**au moins un palier fixe (3) est prévu pour transmettre des forces dans la direction longitudinale et transversale du véhicule sur rails entre le châssis (2) et la caisse (1).

2. Véhicule sur rails selon la revendication 1, **caractérisé en ce que** le au moins un palier fixe (3) est disposé au milieu du véhicule.

3. Véhicule sur rails selon la revendication 1 ou 2, **caractérisé en ce qu'**un dispositif anti-soulèvement (5) par complémentarité de forme est prévu, qui, après une défaillance de la liaison adhésive (4), transmet des forces verticales entre le châssis (2) et la caisse (1).

4. Véhicule sur rails selon l'une des revendications 1 à 3, **caractérisé en ce que** le au moins un palier fixe (3) comprend un alésage et un boulon insérable dans cet alésage.

5. Véhicule sur rails selon l'une des revendications 1 à 3, **caractérisé en ce que** le au moins un palier fixe (3) est formé directement par la géométrie d'un composant du châssis (2) et de la caisse (1) qui correspondent l'un à l'autre.

6. Véhicule sur rails selon l'une des revendications 1 à 5, **caractérisé en ce que** le châssis (2) est fabriqué en acier et la caisse (1) est fabriquée en un alliage léger.
